# FASCICULE DE BREVET EUROPEEN

(11) **EP 0 385 824 B1**
(45) Date de publication et mention de la délivrance du brevet: **07.04.1993**
(21) Numéro de dépôt: 90400412.4
(22) Date de dépôt: 14.02.1990
(51) Int. Cl.: B29C 45/16, F21V 7/22

(54) **Procédé de fabrication d'un réflecteur en matière synthétique pour dispositif d'éclairage**
Verfahren zur Herstellung eines Reflektors aus Kunststoff für Beleuchtungsvorrichtungen
Method for making a reflector of synthetic material for a lighting device

(30) Priorité: 03.03.1989 FR 8902761
(43) Date de publication de la demande: 05.09.1990
(73) Titulaire: VALEO VISION, 93012 Bobigny Cédex (FR)
(72) Inventeur: Duneau, André, F-27000 Evreux (FR)
(74) Mandataire: Lemaire, Marc

(56) Documents cités:
- EP-A- 0 182 228
- DE-A- 1 472 515
- FR-A- 2 090 633
- GB-A- 1 570 531
- GB-A- 2 071 559
- US-A- 3 482 284

## Description

L'invention concerne un procédé de fabrication d'un dispositif d'éclairage avec au moins un réflecteur du type comprenant une âme rigide recouverte d'une peau en matière synthétique lisse qui est métallisée.

Dans FR-A-2.432.137, on a proposé d'injecter successivement dans un même moule une matière synthétique non chargée, destinée à constituer la peau, puis la même matière munie de charges pour constituer l'âme. Ce procédé connu, qui est utilisé industriellement avec un grand succès pour la fabrication de projecteurs de véhicules automobiles, présente cependant des limites d'utilisation. En particulier, la première matière injectée est répartie sur toute la surface du projecteur, y compris la face arrière et les autres zones non réfléchissantes, de sorte qu'une dégradation en surface peut se produire, lors du fonctionnement, en particulier dans la partie supérieure du projecteur.

En outre, la répartition des deux matières dans le moule ne se fait pas parfaitement et, en particulier, la matière de peau n'a pas la même épaisseur dans toutes les zones de la pièce. De plus, ce procédé connu est difficile à appliquer à des projecteurs de formes compliquées, en particulier à plusieurs réflecteurs, ainsi qu'à des moules à plusieurs empreintes.

Un réflecteur obtenu par ce procédé est décrit dans EP-A-0182228

On a également proposé (voir FR-A-2.055.889) de surmouler une matière thermoplastique dans la partie interne d'un flan métallique embouti. Ce procédé connu est d'application très limitée du fait, d'une part, de l'utilisation d'une ébauche métallique qui ne permet pas des formes très compliquées et, d'autre part, en raison de l'apparition de craquelures du fait des différences de dilatations sous l'effet de la chaleur dégagée par une lampe placée au centre du réflecteur, en fonctionnement.

La présente invention vise, en conséquence, à fournir un nouveau procédé de fabrication d'un réflecteur totalement en matière synthétique qui ne présente pas les inconvénients des procédés connus.

A cet effet, le procédé selon l'invention est caractérisé par le fait qu'on moule, dans une première phase d'injection, ladite peau en matière synthétique faiblement ou non chargée, puis on surmoule sur cette dite peau, dans une seconde phase d'injection, ladite âme rigide en matière synthétique chargée.

On peut ainsi obtenir la peau avec la précision d'épaisseur, de dimension et de position voulue, de sorte qu'on peut éliminer tout risque de dégradation et que la partie supérieure du projecteur, avantageusement réalisée en matière chargée, est considérablement renforcée.

De préférence, l'injection est effectuée sur une presse, dite à deux couleurs en deux stations, telle que, par exemple, décrite dans les documents FR-A-2090 633 et US-A-3482 284, avec rotation du plateau porte-moule, l'injection de la peau étant effectuée entre le noyau et une première poche à la première station et l'injection de l'âme étant effectuée entre le noyau, sur lequel est maintenue ladite peau, et une seconde poche à la seconde station.

On peut ainsi fabriquer, à l'échelle industrielle, des projecteurs de forme quelconque comportant plusieurs réflecteurs, dans des moules à plusieurs empreintes, de sorte que le procédé est extrêmement économique.

Avantageusement, on injecte avec l'âme des nervures de renforcement dans la zone arrière chargée, ce qui apporte une grande rigidité de toute la zone périphérique.

L'invention concerne également les projecteurs et/ou feux de signalisation pour véhicules automobiles obtenus par ce procédé.

L'invention sera bien comprise à la lecture de la description suivante faite en se référant au dessin annexé dans lequel :
- la figure 1 est une vue en coupe horizontale d'un projecteur selon un exemple de réalisation de l'invention ;
- la figure 2 est une vue de face du projecteur de la figure 1 ;
- la figure 3 est une vue en coupe verticale du projecteur des figures 1 et 2 ;
- la figure 4 est une vue en coupe d'une station d'injection de la peau du projecteur des figures 1 à 3 ;
- la figure 5 est une vue en coupe d'une station d'injection de l'âme du projecteur des figures 1 à 3.

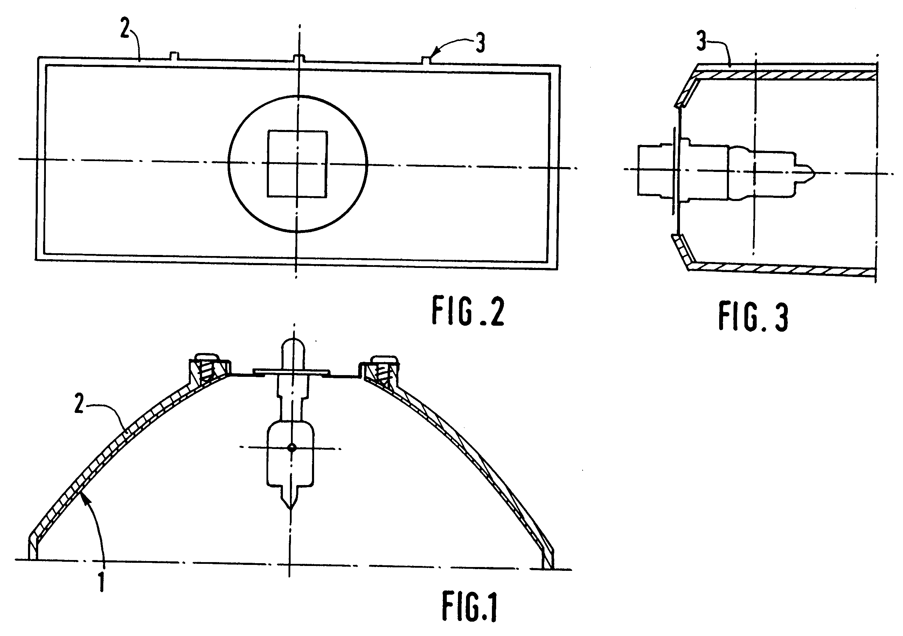

Le projecteur simple représenté aux figures 1 à 3 comprend une peau 1 en matière thermoplastique non chargée qui est recouverte d'une métallisation réfléchissante (non représentée) portée par une âme 2 en matière thermoplastique chargée. L'âme 2 comporte des nervures de raidissement 3 venues de moulage.

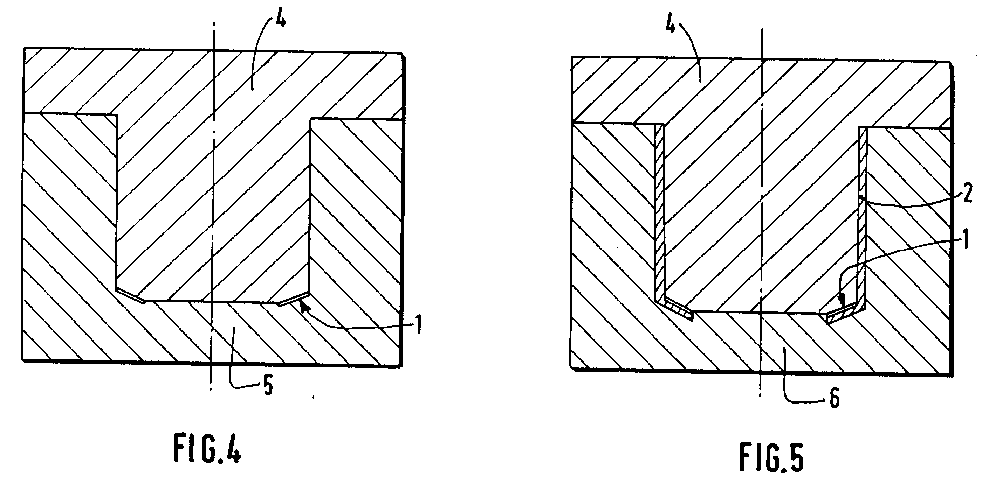

La peau 1 est injectée dans une première station (figure 4) d'une presse à deux couleurs, entre un noyau 4 et une première poche 5. Après rotation de 180°, le noyau 4, sur lequel est maintenue ladite peau 1, arrive en regard d'une seconde poche 6 dans laquelle est surmoulée l'âme chargée 2.

On notera que, selon une caractéristique importante de l'invention, lors du transfert de ladite première station vers ladite seconde poche, la surface optiquement active de la peau 1 reste en contact avec le noyau 4; ainsi celle-ci se trouve protégée jusqu'au stade final de moulage où cette dernière se trouve alors renforcée par la présence de l'âme rigide 2.

Le projecteur peut comprendre plusieurs réflecteurs. Le moule peut comprendre plusieurs empreintes, par exemple celles d'un projecteur de droite et celles d'un projecteur de gauche.

Le procédé selon l'invention s'applique aussi, par exemple, aux feux de signalisation, en particulier à ceux dont au moins une lampe est de forte puissance, comme c'est le cas des feux à iode ou des feux équipés de transparents gris ou à bandes qui nécessitent en conséquence une bonne tenue thermique.

## Revendications

1. Procédé de fabrication d'un réflecteur pour dispositif d'éclairage avec au moins un réflecteur du type comprenant une âme rigide recouverte d'une peau en matière synthétique lisse qui est métallisée, caractérisé par le fait qu'on moule, dans une première phase d'injection, ladite peau (1) en matière synthétique faiblement ou non chargée, puis on surmoule sur cette dite peau (1), dans une seconde phase d'injection, ladite âme rigide (2) en matière synthétique chargée.

2. Procédé selon la revendication 1, caractérisé par le fait que l'injection est effectuée sur une presse à deux couleurs en deux stations, avec rotation du plateau porte-moule, l'injection de la peau (1) étant effectuée entre le noyau (4) et une première poche (5) à la première station et l'injection de l'âme (2) étant effectuée entre le noyau (4), sur lequel est maintenue ladite peau (1), et une seconde poche (6) à la seconde station.

3. Procédé selon l'une des revendications 1 et 2, caractérisé par le fait qu'on injecte avec l'âme (2) des nervures de renforcement (3) dans la zone arrière chargée.

4. Projecteur et/ou feu de signalisation pour véhicule automobile comportant un réflecteur en matière plastique formé d'une peau (1) et d'une âme (2) en matière plastique chargée, caractérisé en ce que ladite âme (2) est surmoulée sur ladite peau (1).

## Patentansprüche

1. Verfahren zur Herstellung eines Reflektors für eine Beleuchtungsvorrichtung mit wenigstens einem Reflektor, enthaltend einen starren Kern, versehen mit einer Haut aus glattem, mit Metall überzogenen Kunststoff, **dadurch gekennzeichnet**, daß in einer ersten Einspritzphase die genannte Haut (1) aus leicht gefülltem oder nicht gefülltem Kunststoff geformt und dieser genannten Haut (1) anschließend in einer zweiten Einspritzphase der genannte starre Steg (2) aus gefülltem Kunststoff überformt wird.

2. Verfahren nach Anspruch 1, **dadurch gekennzeichnet,** daß die Einspritzung auf einer Zwei-Farb-/Zwei-Stationen-Presse mit rotierender Formaufspannplatte erfolgt, wobei die Einspritzung der Haut (1) zwischen dem Kern (4) und einer ersten Tasche (5) in der ersten Station und die Einspritzung des Stegs (2) zwischen dem Kern (4), woran die genannte Haut (1) befestigt ist, und einer zweiten Tasche (6) in der zweiten Station erfolgt.

3. Verfahren nach einem der Ansprüche 1 und 2, **dadurch gekennzeichnet,** daß mit dem Steg (2) Verstärkungsrippen (3) in die gefüllte hintere Zone eingespritzt werden.

4. Scheinwerfer und/oder Signallenchte für Kraftfahrzeuge, enthaltend einen Reflektor aus Kunststoff, bestehend aus einer Haut (1) und einem Steg (2) aus gefülltem Kunststoff, **dadurch gekennzeichnet,** daß der genannte Steg (2) der genannten Haut (1) überformt ist.

## Claims

1. A method of making a reflector, for a lighting apparatus having at least one reflector of the type comprising a rigid body covered with a skin of flexible synthetic material which is metallised, characterised by the fact that the said skin (1), being of a synthetic material which is reinforced slightly or not at all, is moulded in a first phase of injection, and the said rigid body (2), being of reinforced synthetic material, is then moulded in a second phase of injection.

2. A method according to Claim 1, characterised by the fact that the injection is carried out in a two-colour press having two stations with rotation of the mould support plate, the injection of the skin (1) being carried out between the core element (4) and a first pocket element (5) at the first station, and the injection of the body (2) being carried out between the core element (4), on which the said skin (1) is held, and a second pocket element (6) at the second station.

3. A method according to one of Claims 1 and 2, characterised by the fact that reinforcing ribs (3) are injected, together with the body (2), into the reinforced rear zone.

4. A headlamp and/or indicating display for a motor vehicle, including a reflector of plastics material comprising a skin (1) and a body (2) of reinforced plastics material, characterised in that the said body (2) is overlaid on the said skin (1) by moulding.
